# EUROPEAN PATENT APPLICATION

(11) **EP 4 832 357 A1**
(43) Date of publication of application: **28.10.2026**
(21) Application number: 25172691.5
(22) Date of filing: 25.04.2025
(51) Int. Cl.: H04B 1/04, H04B 1/18, G07C 9/00, B60R 25/04

(54) **TELEMATIC CONTROL UNIT**

(71) Applicant: Valeo Comfort and Driving Assistance, 94000 Créteil (FR)
(72) Inventor: STRUNCK Sebastian, 94000 Créteil (FR); SAUER Bernd, 94000 Créteil (FR); HELLER Janik, 94000 Créteil (FR); ADELA Bedilu, 94000 Créteil (FR)
(74) Representative: Delaval, Guillaume Laurent

(57) **Abstract**

It is provided a telematic control unit for an automotive vehicle, comprising a telecommunication device (5) comprising a signal port (7), a radiofrequency front-end module (11), an adaptive impedance matching module (10) configured to be in at least two distinct configurations, in each of which it provides a distinct impedance matching between the signal port and the RF front end module, a controller (12) configured to control the adaptive impedance matching module and a bus interface (13) configured to receive data from outside of the telecommunication device (5), wherein the telecommunication device (5) comprises a memory (14) in which a look-up table (15) is stored, the look-up table attributing an identifier value to each of the two distinct configurations of the adaptive impedance matching module, the controller being configured to receive an identifier value from the bus interface and to control the adaptive impedance matching module in such a way it operates in the configuration attributed to the received identifier value in the look-up table.

## Description

### TECHNICAL FIELD OF THE INVENTION

The invention relates to the field of radiofrequency communications, for instance radiofrequency communication used in automotive vehicles.

More precisely the invention relates to a telematic control unit.

### BACKGROUND INFORMATION AND PRIOR ART

A telematic control unit (TCU) is a telecommunication device embedded in an automotive vehicle, and which is configured to perform telecommunication operations, for instance internet access, communication with Global Navigation Satellite system, or short-range communication, for instance with a remote keyless entry module. A telematic control unit therefore comprises several radiofrequency subsystems, each being coupled to one or several dedicated antennas and ensuring a specific function.

In radiofrequency communication, impedance matching is a technic used to optimize the energy transfer and to minimize the reflection between a load (or receiver) and a source (emitter). Radiofrequency systems therefore comprise an impedance matching circuit specifically designed to this purpose.

The impedance matching of a matching circuit is dependent on its environment. Therefore, changing the environment of the radiofrequency system may lead to impedance mismatch and communication problems.

A telematic control unit may be placed in different locations of an automotive vehicle, for instance under the roof, inside the dashboard or in the trunk. In order for the antennas of the telematic control unit to radiate efficiently, a location under the roof is usually chosen. Depending on the model of the vehicle, the part of the roof that covers the telematic control unit may comprise different materials, for instance glass or plastic. Therefore, depending on the model of the car, it is necessary to change the design of at least some of the radiofrequency systems of the telematic control unit. This can lead to excessive costs and inefficiencies in vehicle production.

### SUMMARY OF THE INVENTION

Therefore, one object of the invention is to provide a telematic control unit that could be used in different vehicles environment.

According to an aspect of the invention, it is provided a telematic control unit for an automotive vehicle, comprising a telecommunication device, said telecommunication device comprising a signal port, a radiofrequency front-end module, an adaptive impedance matching module configured to be in at least two distinct configurations, each of which provides a distinct impedance matching between the signal port and the radiofrequency front end module, a controller configured to control the adaptive impedance matching module and an interface configured to receive data from outside the telecommunication device, wherein the telecommunication device comprises a memory in which a look-up table is stored, the look-up table attributing an identifier value to each of the two distinct configurations of the adaptive impedance matching module, the controller being configured to receive an identifier value via the bus interface and to control the adaptive impedance matching module in such a way that it operates in the configuration attributed to the received identifier value in the look-up table.

Thanks to the adaptive impedance matching module and the controller, it is possible to provide a same telematic control unit to different models of automotive vehicles. Indeed, depending on the electromagnetic environment of the telematic control unit mounted on the vehicle (which is the same for different vehicles of a same model), the most suitable configuration may be selected for the adaptive impedance matching module which will therefore provide a suitable impedance matching between the signal port and the RF front-end module. The provision of several different telematic control units for several different electromagnetic environments of the automotive vehicle is therefore avoided.

According to an embodiment, the look-up table attributes a maximum transmitting power value for the front-end module to each of the identifier values, the controller being configured to control the front end module in such a way that it provides a transmitting power lower than or equal to the maximum power value attributed to the received identifier in the look-up table.

According to an embodiment, the look-up table attributes a duty cycle value to each of the identifier values, the controller being configured to control the front end module in such a way that it transmits signals according to the duty cycle attributed to the received identifier value.

According to an embodiment, the telecommunication device is a Remote keyless entry transceiver configured to communicate with a remote keyless entry user terminal.

According to an embodiment, the identifier is representative of the model of the automotive vehicle.

According to an embodiment, the interface is configured to receive the identifier from an electronic control unit of the automotive vehicle which is external to the telematic control unit.

According to an embodiment, the interface is a LIN (Local Interconnect Network) bus interface, a CAN (Controller Area Network) interface or an ethernet interface.

According to an embodiment, the telematic control unit comprises an impedance matching circuit interposed between the signal port 7 and the adaptive impedance matching module.

According to an embodiment, the system controller is configured to control the adaptive impedance matching module by controlling at least a switch of the adaptive impedance matching module.

According to another aspect, it is provided a system comprising a radiofrequency antenna, an electronic control unit and a telematic control unit according to the invention, the signal port being connected to the radiofrequency antenna, the interface being connected to the electronic control unit, the electronic control unit being configured to transmit the identifier value to the controller through the interface.

The electronic control unit is for instance configured to transmit to the controller (via the interface) a single identifier value (corresponding to the model of the vehicle in which the electronic control unit is mounted) among the identifier values stored in the look-up table.

### DETAILED DESCRIPTION OF EXAMPLE(S)

The following description with reference to the accompanying drawings will make it clear what the invention consists of and how it can be achieved. The invention is not limited to the embodiment illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 is a schematical view of an automotive vehicle comprising a telematic control unit according to an embodiment of the invention,
- Figure 2 is a schematic view of the architecture of a radiofrequency subsystem of the telematic control unit of the automotive vehicle of figure 1.

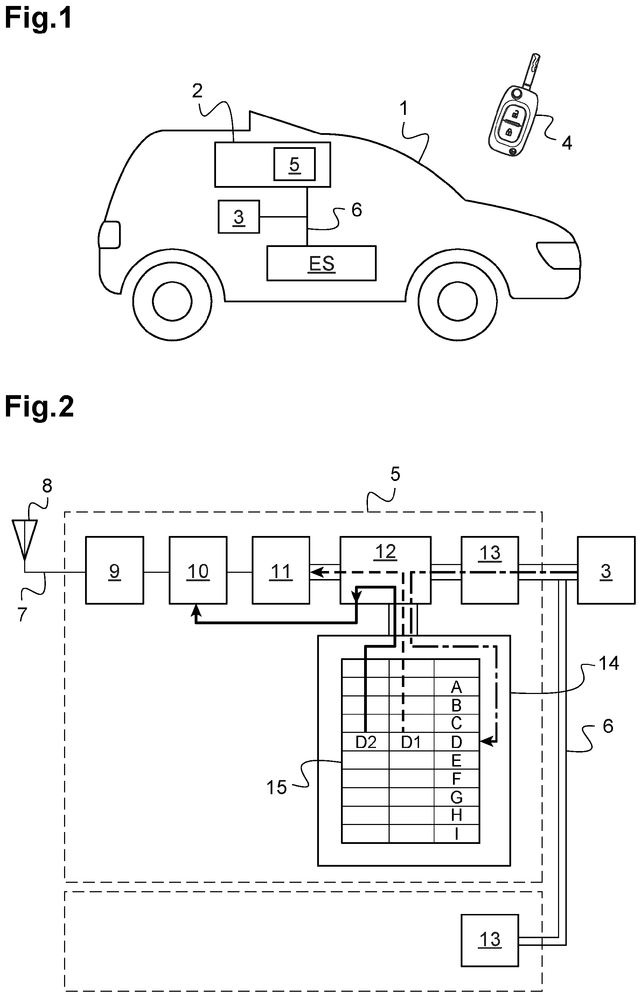

An automotive vehicle 1, here a car, equipped with a telematic control unit 2 according to an embodiment of the invention and with an electronic control unit 3 is shown in figure 1.

The automotive vehicle 1 is for instance a specific model from a series of several models produced by a same manufacturer. For instance, in this specific model, the telematic control unit 2 is placed on the roof of the automotive vehicle, under a glass cover. Other models from the series may differ in that the telematic control unit is placed under a cover made from a different material, for instance a polymer material, or placed in another location in the vehicle. In other words, in each model of the vehicles of the series, the telematic control unit is placed in a different electromagnetic environment, given that the electromagnetic environment is the same for two vehicles of a same model.

The telematic control unit 2 comprises a telecommunication device 5, here an RKE (for "Remote Keyless Entry") radiofrequency transceiver configured to communicate with an RKE user terminal 4. The RKE radiofrequency transceiver is configured to communicate with the RKE user terminal in one or several predetermined frequency bands. For instance, the predetermined frequency band may be defined according to the standards defined in the area of the world in which the telematic control unit is to be used.

For instance, the predetermined frequency band may be an ISM (Industrial, Scientific, Medical) radiofrequency band, for instance a frequency band centered around 433.92 MHz, for instance comprised between 433.05 MHz and 434.79 MHz. This frequency band corresponds to a standard used in Europe. The communication may be performed at other frequencies, for instance in a frequency band centered around 315 MHz, which corresponds to a standard used in Japan.. The communication is performed according to a frequency-shift modulation (FSK) or according to an amplitude-shift modulation.

The electronic control unit 3 is configured to control different electronic subsystems of the automotive vehicle 1. It comprises a microprocessor, a memory, and a plurality of input/output ports. Here the electronic control unit is configured to control the electronic subsystems according to the LIN protocol (Local Interconnect Network), and the electronic control unit 3 is connected to the different subsystem via a LIN bus 6. To this end, each of the electronic subsystem comprises a LIN bus interface 13. On the figures, only two electronic subsystems are shown, among which the RKE radiofrequency transceiver 5 and another electronic subsystem ES (the latter not being further described to simplify the description).

The RKE radiofrequency transceiver 5 is configured to, when receiving a signal from the RKE user terminal 4, trigger vehicle operations, for instance locking or unlocking the door. For instance, the RKE radiofrequency transceiver 5, when receiving the signal from the RKE user terminal 4, transmits a signal to the electronic control unit 3. The electronic control unit 3 is configured to, at reception of the signal from the RKE user terminal 5, control the corresponding subsystem of the automotive vehicle 1 in such a way it performs the vehicle operation.

The RKE radiofrequency transceiver 5 is also configured to transmit signals. For instance, the RKE radiofrequency transceiver is configured to transmit signal to the RKE user terminal 4 in response to the reception of the signal received from the RKE user terminal 4. For instance, the transmitted signal may be an acknowledgment signal. Other transmitted signals may be intended to locate the RKE user terminal 4 relatively to the automotive vehicle 1, or be part of an authentication procedure between the RKE user terminal 4 and the automotive vehicle 1.

As shown in figure 2, the RKE radiofrequency transceiver 5 of this embodiment comprises a signal port 7, an impedance matching module 9, an adaptive impedance matching module 10, a radiofrequency front-end module 11, a system controller 12, a memory 14 and a bus interface 13.

Here, the signal port 7 is coupled to a radiofrequency antenna 8. The radiofrequency antenna is intended to receive the signal sent by the RKE user terminal 4 and to emit the signals provided by the RKE radiofrequency transceiver 5. It comprises for instance a loop antenna printed on the same electronic circuit board as the other component of the RKE radiofrequency transceiver 5.

The impedance matching module 9 is a static impedance matching module configured to perform a tuning of the received signal or of the signal to be transmitted. It comprises a plurality of passive elements. For instance, it comprises inductive and capacitive elements, for instance capacitors and inductors.

The adaptive impedance matching module 10 is configured to provide impedance matching between the radiofrequency front-end module 11 and the signal port 7, i.e. between the radiofrequency front-end module 11 and the radiofrequency antenna 8. It comprises a plurality of passive radiofrequency components, for instance capacitors, inductors and resistors. It also comprises a plurality of active radiofrequency elements, for instance a plurality of switches and a plurality of varactors. The switches may be mechanical switches (that may be used to connect some of the passive radiofrequency components to the ground), for instance SPTD switches (Single Pole Double Throw), and/or electronic switches, for instance comprising transistors.

The adaptive impedance matching module 10 is configured to be in at least two configurations, for instance here nine configurations. Each configuration corresponds to specific states respectively for the plurality of switches (some switches being on, other switches being off), that provide a specific interconnection between the passive elements, and to specifics capacitive values of the varactors. Each configuration of the impedance matching module 9 provides a distinct impedance between the signal port 7 and the radiofrequency front end module 11. For instance here, each configuration is adapted, for the communication between the RKE radiofrequency transceiver 5 and the RKE user terminal 4, to the electromagnetic environment of a distinct model of the series of vehicle of the manufacturer.

A similar impedance matching module is described in Qiao, Dongjiang & Zhao, Yu & Hung, Tsaipi & Kimball, Donald & Li, Mingyuan & Asbeck, P. & Choi, D. & Kelly, Dylan. (2005). Antenna impedance mismatch measurement and correction for adaptive CDMA transceivers. 2005. 4 pp.. 10.1109/MWSYM.2005.1516730*.*

The radiofrequency front-end module 11 is configured to process the signal received from the radiofrequency antenna 8 so as to extract the relevant data and make it digitally usable. It is also configured to process the signal to be transmitted by the radiofrequency antenna 8. It comprises for instance a mixer stage, a local oscillator, a low-noise amplifier, a bandpass filter, a power amplifier and switches to switch between transmission and reception operations.

The system controller 12 is configured to control the adaptive impedance matching module 10, and more particularly to select the matching impedance configuration of the adaptive impedance matching module 10. It is configured to communicates with the memory 14.

The system controller 12 is configured to communicate with the adaptive impedance matching module 10 through General Purpose Input/Output (GPIO) ports. Alternatively, the system controller 12 may be configured to communicate with the adaptive impedance matching module 10 through a Mobile Industry Processor Interface (MIPI).

The memory 14 is for instance an electrically erasable programmable read-only memory (EEPROM). It stores a look-up table 15 relating to the matching configuration of the adaptive impedance matching module 10. Here, the look-up table 15 establishes correspondences between identifier values (represented in the figures by the letters A to I) and impedance matching configurations. Here, each identifier value is linked to one impedance matching configuration.

In this example, each identifier is also linked to a maximum transmitting power value. For instance, the maximum transmitting power value corresponds to an official standard. For instance, the official standard depends on the country in which the specific model of the series of vehicle is intended to be sold and used.

As mentioned above, the bus interface 13 is a LIN Bus interface configured to receive data from and send data to electronic control unit 3.

Thanks to its above-mentioned configuration, the telematic control unit 2 is suitable to operate in various different vehicle models, i.e. in various electromagnetic environments.

For instance, after the telematic control unit 2 has been installed in the automotive vehicle 1, here under the roof of the automotive vehicle, the electronic systems of the automotive vehicle, among which the RKE radiofrequency transceiver 5 and the electronic control unit 3, are turned on for the first time.

The electronic control unit 3 then sends an identifier value, for instance here the value D, to the system controller 12 via the LIN bus interface 13. The Identifier value is representative of the model of the automotive vehicle, and therefore of the electromagnetic environment of the telematic control unit 2 placed in the vehicle. For instance, the electronic control unit 3 has been programmed to contain, in a memory, the identifier value. Preferably, the electronic control unit 3 retrieves the identifier value from another electronic subsystem of the automotive vehicle 1.

At reception of the identifier value, the system controller 12 retrieves the impedance matching configuration corresponding to this identifier value in the look-up table 15 and controls the adaptive impedance matching module in such a way that it provides the corresponding impedance matching between the signal port 7 and the radiofrequency front-end module 11. The system controller also controls the radiofrequency front-end module 11 so it transmits signal with a power lower than or equal to the maximum power value corresponding to the identifier value and according to the duty cycle corresponding to the identifier value.

The impedance matching configuration is maintained during the lifetime of the automotive vehicle and does not change anymore, unless the telematic control unit is removed from the automotive vehicle and placed in another vehicle.

The invention is not limited to the embodiment described above in connection to figures 1 and 2.

For instance, it has been described an automotive vehicle being a car. The invention is not limited to this type of vehicle and in other embodiments, the vehicle may be a truck, a bus, a motorcycle or a boat.

It has been described a system controller comprising identifiers corresponding respectively to different models of vehicle from a same manufacturer. In other embodiments, the identifier value corresponds to different models of vehicle from different manufacturers.

Also, it has been described a look-up table which attributes an impedance matching configuration and a maximum transmitting power value to each identifier value. In other embodiments, more parameters are attributed to each identifier value. For instance, in some embodiments each identifier is linked to a duty cycle value of the radiofrequency antenna. For instance, the duty-cycle value corresponds to an official standard. For instance, the official standard depends on the country in which the specific model of the series of vehicle is intended to be sold and used. In other embodiment, only the impedance matching configurations are linked to the identifier values.

The radiofrequency antenna described above is a loop antenna printed on a printed circuit board. The invention also encompasses, for the radiofrequency antenna, a monopole antenna, a Planar Inverted-F Antenna (PIFA, for instance for Wi-Fi communications), or a stamped metal antenna connected to the printed circuit board.

## Claims

1. Telematic control unit for an automotive vehicle (1) comprising a telecommunication device (5), said telecommunication device (5) comprising a signal port (7), a radiofrequency front-end module (11), an adaptive impedance matching module (10) configured to be in at least two distinct configurations, each of which provides a distinct impedance matching between the signal port (7) and the radiofrequency front end module (11), a controller (12) configured to control the adaptive impedance matching module (10) and an interface (13) configured to receive data from outside the telecommunication device (5),
**characterized in that** the telecommunication device (5) comprises a memory (14) in which a look-up table (15) is stored, the look-up table (15) attributing an identifier value to each of the two distinct configurations of the adaptive impedance matching module, the controller (12) being configured to receive an identifier value via the bus interface (13) and to control the adaptive impedance matching module (10) in such a way that it operates in the configuration attributed to the received identifier value in the look-up table (15).

2. Telematic control unit according to claim 1, wherein the look-up table (15) attributes a maximum transmitting power value for the front-end module (11) to each of the identifier values, the controller (12) being configured to control the front end module (11) in such a way that it provides a transmitting power lower than or equal to the maximum power value attributed to the received identifier in the look-up table (15).

3. Telematic control unit according to claim 1 or 2, wherein the look-up table (15) attributes a duty cycle value to each of the identifier values, the controller (12) being configured to control the front end module (11) in such a way that it transmits signals according to the duty cycle attributed to the received identifier value.

4. Telematic control unit according to any one of claims 1 to 3, wherein the telecommunication device (5) is a Remote keyless entry transceiver configured to communicate with a remote keyless entry user terminal (4).

5. Telematic control unit according to any one of claims 1 to 4, wherein the identifier value is representative of the model of the automotive vehicle (1).

6. Telematic control unit according to any one of claims 1 to 5, wherein the interface (13) is configured to receive the identifier from an electronic control unit (3) of the automotive vehicle which is external to the telematic control unit (2).

7. Telematic control unit according to any one of claims 1 to 6, wherein the interface (13) is a LIN bus interface.

8. Telematic control unit according to any one of claims 1 to 7, comprising an impedance matching circuit (9) interposed between the signal port (7) and the adaptive impedance matching module (10).

9. Telematic control unit according to any one of claims 1 to 8, wherein the system controller (12) is configured to control the adaptive impedance matching module (10) by controlling at least a switch of the adaptive impedance matching module (10).

10. System comprising a radiofrequency antenna (8), an electronic control unit (3) and a telematic control unit (2) according to any one of claims 1 to 9, the signal port (7) being connected to the radiofrequency antenna (8), the interface (13) being connected to the electronic control unit (3), the electronic control unit being configured to transmit the identifier value to the controller (12) through the interface (13).
